# EUROPÄISCHE PATENTSCHRIFT

(11) **EP 1 700 661 B1**
(45) Veröffentlichungstag und Bekanntmachung des Hinweises auf die Patenterteilung: **16.05.2007**
(21) Anmeldenummer: 05004979.0
(22) Anmeldetag: 08.03.2005
(51) Int. Cl.: B23D 61/02

(54) **Kreissägeblatt**
Circular sawblade
Lame de scie circulaire

(43) Veröffentlichungstag der Anmeldung: 13.09.2006
(73) Patentinhaber: Ledermann GmbH & Co. KG, 72160 Horb (DE)
(72) Erfinder: Fendeleur, Dominique, 67460 Souffelweyersheim (FR); Bok, Peter, 72160 Horb (DE)
(74) Vertreter: Riedel, Peter

(56) Entgegenhaltungen:
- EP-A- 0 478 237
- WO-A-83/01587
- DE-A1- 10 123 752

## Beschreibung

Die Erfindung betrifft ein Kreissägeblatt mit den Merkmalen nach dem Oberbegriff des Anspruchs 1.

Kreissägeblätter zum Trennen von Holz, Kunststoff, Metall oder dgl. weisen einen kreisscheibenförmigen Tragkörper auf, um dessen Umfang herum eine Anzahl von Sägezähnen verteilt ist. Im Betrieb wird das Kreissägeblatt um eine mittige, senkrecht zur Ebene des Tragkörpers stehende Drehachse drehend angetrieben. Die einer Kreisbahn folgenden Sägezähne schneiden mit einem seitens des Benutzers wählbaren Vorschub den zu trennenden Werkstoff. Die sequentiell auf den Werkstoff treffenden Schneidzähne erfahren Schnittkräfte, die unter anderem als Funktion der Drehzahl und des Zahnabstandes eine Schwingungsanregung des Kreissägeblattes bewirken.

Weitere Ursache der Schwingungsanregung liegt in der jeweils gewählten Zahnform und deren Wechselwirkung mit dem zu bearbeitenden Werkstoff begründet. Beim Schnitt können Querkräfte auftreten, die das Kreissägeblatt oszillierend seitlich auslenken. Die Schwingungsanregung kann noch durch das beim Schnitt entstehende Zerspangut unterstützt werden, welches insbesondere bei einer hohen Zähnezahl in Verbindung mit Werkstoffen wie beispielsweise Aluminium Schwierigkeiten beim Austrag bereitet. Bei einer hohen Zähnezahl sind die zwischen den Schneidzähnen liegenden Spanräume vergleichsweise klein. Es kann vorkommen, daß das entstehende Zerspangut nicht vollständig von den kleinen Spanräumen aufgenommen werden kann und infolge dessen zwischen dem Tragkörper des Kreissägeblattes und den Schnittflächen des Werkstückes durchgepreßt wird.

Die durch die vorgenannten Effekte bewirkten Schwingungen des Kreissägeblattes führen zu einer unerwünscht hohen Geräuschentwicklung. Bei der üblichen Ausbildung von Kreissägeblättern mit einer über den Umfang gleichbleibenden Zahnteilung wir die Anregung harmonischer Schwingungen und eine damit einhergehende Geräuschentwicklung begünstigt. Die schwingenden Sägezähne und eingeklemmtes Zerspangut zeichnen sich in der Schnittfläche der zu bearbeitenden Werkstücke in Form von kreisbogenförmigen Riefen ab.

Aus der EP 0 478 237 B1 ist ein Kreissägeblatt mit ungleichförmiger Zahnteilung bekannt. Die variierenden Schneidenabstände stehen einer harmonischen Schwingungsanregung entgegen und dienen einer Minderung der Geräuschentwicklung. Ein vergleichbares Kreissägeblatt ist aus der DE 31 21 654 A1 bekannt, bei der als zusätzliche Maßnahme zur Geräuschminderung neben ungleichförmigen Zahnteilungen auch Segmente des Trägerkörpers unterschiedlicher Steifigkeit vorgesehen sind. Die bei beiden vorgenannten Ausführungen vorgesehene Ungleichförmigkeit der Zahnteilung erfordert bei der Herstellung und auch beim Nachschärfen einen hohen Programmier- und Justieraufwand.

Die DE 101 23 752 A1 offenbart noch ein Kreissägeblatt mit in Gruppen zusammengefaßten Sägezähnen. Innerhalb einer Zahngruppe weisen die Sägezähne untereinander eine konstante Teilung auf. Die einzelnen gleich großen Zahngruppen sind durch Zahnlücken voneinander getrennt. Die gleichförmige Zahnteilung erlaubt ein einfaches Bestücken mit Hartmetallschneiden sowie ein leichtes Nachschärfen.

Der Erfindung liegt die Aufgabe zugrunde, ein gattungsgemäßes Kreissägeblatt derart weiterzubilden, daß bei einfacher Herstellung und Nachschärfung die Anregung zum Schwingen im Betrieb verringert ist.

Die Aufgabe wird durch ein Kreissägeblatt mit den Merkmalen des Anspruchs 1 gelöst.

Es wird ein Kreissägeblatt vorgeschlagen, bei dem die Sägezähne durch mindestens zwei Zahnlücken in mindestens zwei Zahngruppen aufgeteilt sind, wobei innerhalb jeder Zahngruppe eine durch die Sägezähne gebildete Teilung konstant ist. Der Tragkörper des Kreissägeblattes weist mindestens zwei von seinem Umfang aus mit einer radialen Komponente nach innen verlaufende Schlitze auf, die den Tragkörper in eine ebensolche Anzahl von Segmenten aufteilt. Einzelne Segmente weichen in ihrem Bogenmaß voneinander ab.

Die Zahnlücken unterbrechen entlang des Umfanges die gleichförmige Anordnung der Zähne. Die durch die Zahnlücken bewirkten Unterbrechungen verringern eine gleichförmige, harmonische Schwingungsanregung. Die Geräuschentwicklung wird vermindert und die Schnittgenauigkeit erhöht. Zusätzlich zur Schwingungsentkopplung im Bereich der Zahngruppen wird auch eine Schwingungsentkopplung im Außenbereich des Tragkörpers erreicht, die die schwingungsreduzierende und geräuschdämpfende Wirkung der Zahnlücken unterstützt.

Die innerhalb der Zahngruppen konstante Teilung der Zähne erlaubt eine einfache, vollautomatische Fertigung und einen geringen Vorrichtungsaufwand für das Nachschärfen. Die Zahnlücken entkoppeln lokale Schwingungsformen einzelner Zahngruppen. Die Zahnlücken bilden einen vergrößerten Spanraum, in dem größere Mengen von Zerspangut Platz finden. Einquetschungen des Zerspangutes und Riefenbildungen an den Schnittflächen des Werkstückes sind vermieden oder zumindest verringert.

Zwischen zwei Zahngruppen können Zahnlücken mit dem doppelten oder mehrfachen Bogenmaß eines Sägezahns angeordnet sein. Zweckmäßig sind zwei benachbarte Zahngruppen durch eine Zahnlücke voneinander getrennt, deren Bogenmaß gleich dem Bogenmaß eines einzelnen Sägezahnes ist. Es hat sich gezeigt, daß eine Zahnlücke mit dem Bogenmaß eines einzelnen Sägezahnes zur schwingungsmechanischen Trennung zweier Zahngruppen und zur Verminderung einer harmonischen Anregung ausreicht. Gleichzeitig ist sichergestellt, daß der Abstand zwischen zwei eine Zahnlücke einschließenden Zähnen nicht zu groß wird. Die Erzeugung feiner, riefenfreier Schnittflächen ist begünstigt.

In vorteilhafter Weiterbildung sind das Bogenmaß eines einzelnen Sägezahnes und das Bogenmaß einer einzelnen Zahnlücke für sämtliche Zahngruppen und Zahnlücken des Kreissägeblattes gleich. Die insgesamt über den Umfang gleiche Teilung erlaubt ein einfaches Schärfen oder Bestücken mit Hauptmetallschneiden. Eine sequentielle, in gleichmäßigen Drehwinkelabständen erfolgende Schärfung führt bei einer Zahnlücke lediglich zu einem Leer-Arbeitsgang, bevor die Sequenz des Schärfens beim nachfolgenden Zahn ohne weitere Drehwinkeljustierung weitergeführt werden kann.

In vorteilhafter Weiterbildung weisen einzelne Zahngruppen und insbesondere sämtliche Zahngruppen des Kreissägeblattes voneinander abweichende Zähnezahlen auf. Es entsteht eine über den Umfang unsymmetrische Verteilung der Zahnlücken, die zur Verringerung einer harmonischen Schwingungserregung beiträgt.

Bevorzugt weichen sämtliche Segmente des Kreissägeblattes in ihrem Bogenmaß voneinander ab. Die entstehenden Unsymmetrien erschweren die Ausbildung von harmonischen Schwingungen.

Insgesamt ist bei gleicher Zahnteilung eine möglichst ungleichförmige Schwingungserregung angestrebt, der zusätzlich möglichst ungleichförmige und abweichende Eigenschwingungsformen und Frequenzen gegenüberstehen. Zur Erzielung derartiger Unsymmetrien hat sich als zweckmäßig herausgestellt, daß die Anzahl der Segmente und die Anzahl der Zahngruppen voneinander abweichen. Bevorzugt weichen die jeweilige Lage der Zahnlücke innerhalb des zugeordneten Zahnsegmentes - bezogen auf die Umfangsrichtung - für einzelne Segmente und insbesondere für alle Segmente des Kreissägeblattes voneinander ab. Die ungleichförmige Teilung der Segmente erschwert die Ausbildung harmonischer Eigenschwingungsformen. Ihr unregelmäßiger Versatz gegenüber den Zahnlücken vermindert zudem eine Anregung.

Es kann zweckmäßig sein, daß die Anzahl der einem einzelnen Segment zugeordneten Zahnlücken für mehrere und insbesondere für alle Segmente des Kreissägeblattes gleich ist. Je nach Anwendungsfall kann es auch vorteilhaft sein, daß die Anzahl der einem einzelnen Segment zugeordneten Zahnlücken für mehrere und insbesondere für alle Segmente des Kreissägeblattes variiert und vorteilhaft in einem Bereich von einschließlich null bis einschließlich drei Zahnlücken pro einzelnem Segment liegt.

Ausführungsbeispiele der Erfindung sind im folgenden anhand der Zeichnung näher beschrieben. Es zeigen:
- Fig. 1: in einer Draufsicht ein Kreissägeblatt mit gleichförmig verteilten Segmenten des Tragkörpers und unregelmäßig dazu verteilten Zahnlücken;
- Fig. 2: eine vergrößerte Detailansicht des Kreissägeblattes nach Fig. 1 im Bereich einer einzelnen Zahnlücke mit Details zur gleichförmigen Teilung der Zähne;
- Fig. 3: eine Variante des Kreissägeblattes nach Fig. 1 mit über die Anzahl der Segmente variierender Anzahl von Zahnlücken;
- Fig. 4: ein weiteres Ausführungsbeispiel mit ungleichförmig verteilten Zahnlücken und ungleichförmiger Teilung der Tragkörpersegmente.

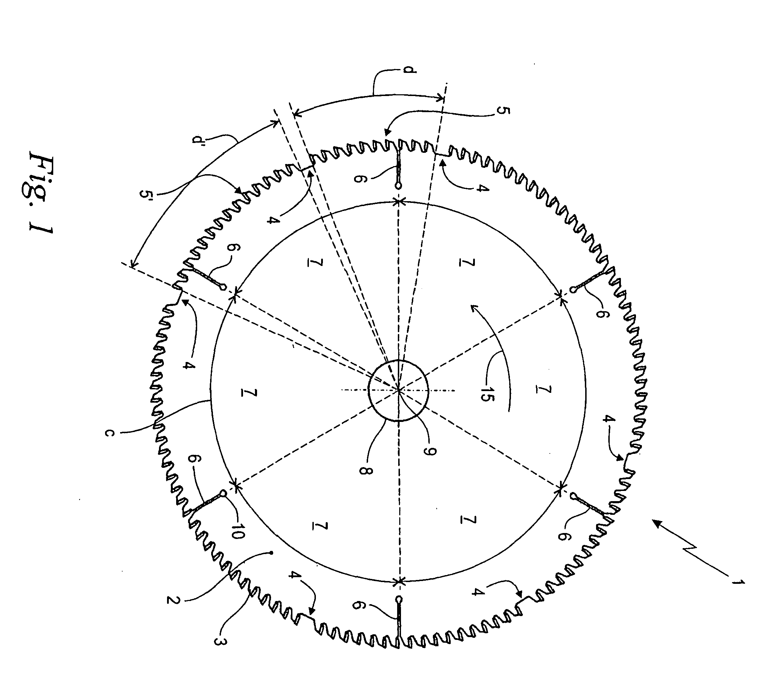

In Fig. 1 ist ein Kreissägeblatt 1 dargestellt, welches einen kreisscheibenförmigen Tragkörper 2 und eine Vielzahl von Sägezähnen 3 aufweist, die um den Umfang des Tragkörpers 2 verteilt sind. Die Zähne 3 sind in einer feinen Teilung angeordnet, wodurch das beispielhaft gezeigte Kreissägeblatt 1 insbesondere für das Trennen von Holz, Kunststoff und NE-Metallen mit feinem Schnitt geeignet ist. Es kann auch eine grobere Zahnteilung für die Ausführung schneller Schnitte beispielsweise in Holz zweckmäßig sein.

Der kreisscheibenförmige Tragkörper 2 ist mittig mit einem kreisrunden Wellenloch 8 versehen, durch das im montierten Zustand eine Antriebswelle hindurchgeführt ist. Im Betrieb wird das Kreissägeblatt 1 um eine mittige, senkrecht zur Ebene des Tragkörpers 2 stehende Drehachse 9 in einer durch einen Pfeil 15 angedeuteten Drehrichtung angetrieben.

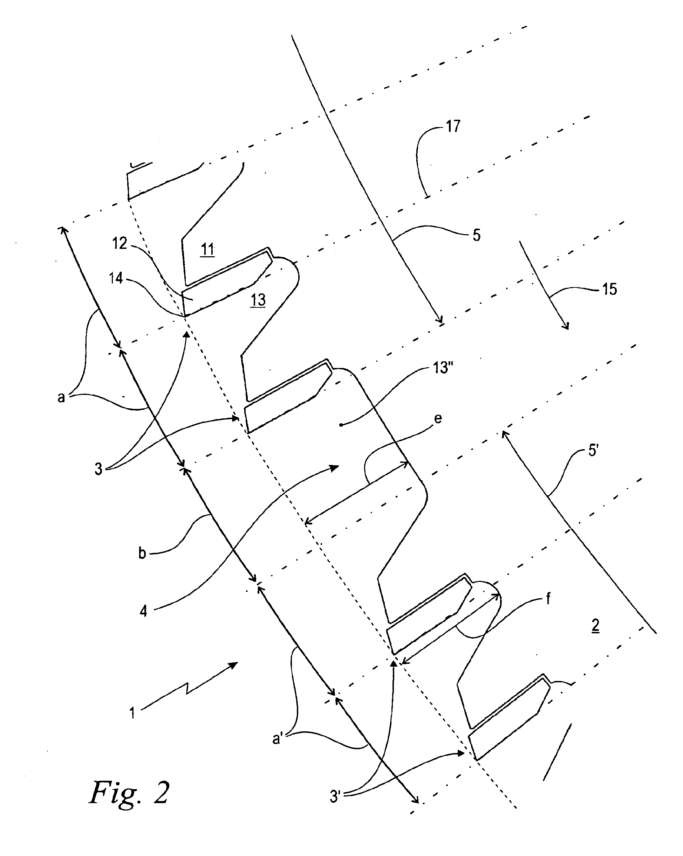

Die Sägezähne 3 sind in mindestens zwei Zahngruppen 5 zusammengefaßt, wobei im gezeigten Ausführungsbeispiel insgesamt sechs Zahngruppen 5 gewählt sind. Die Sägezähne 3 sind innerhalb einer Zahngruppe 5 mit gleichmäßigem Winkelabstand zueinander bezogen auf die Drehachse 9, entsprechend einem gleichbleibenden Bogenmaß oder einer konstanten Teilung angeordnet. Einzelheiten hierzu sind weiter unten im Zusammenhang mit Fig. 2 beschrieben. Zwischen den einzelnen Zahngruppen 5 liegen insgesamt sechs Zahnlücken 4, die durch das vollständige Fehlen eines einzelnen Sägezahnes 3 an der entsprechenden Stelle gebildet sind und die in Umfangrichtung die einzelnen Zahngruppen 5 begrenzen. Es kann zweckmäßig sein, daß einige oder alle Zahngruppen 5 bezogen auf die Drehachse 9 ein gleiches Bogenmaß d einnehmen. In der gezeigten Ausführung sind beispielhaft zwei benachbarte Zahngruppen 5, 5' mit ihrem zugehörigen Bogenmaß d, d' dargestellt, dem zu entnehmen ist, daß ihr jeweiliges Bogenmaß d, d' und auch sämtliche weitere Zahngruppen 5 in ihrem Bogenmaß voneinander abweichen. Im Hinblick auf die konstante Teilung der Sägezähne 3 werden die jeweils unterschiedlichen Werte des Bogenmaßes d, d' dadurch bewirkt, daß jede Zahngruppe 5, 5' eine abweichende Zähnezahl aufweist.

Der Tragkörper 2 weist mindestens zwei und im gezeigten Ausführungsbeispiel sechs von seinem Umfang aus radial nach innen verlaufende Schlitze 6 auf, die den Tragkörper 2 in eine entsprechende Anzahl von Segmenten 7, hier also in sechs Segmente 7 aufteilt. Die Schlitze 6 münden an ihrem radial innenseitigen Ende in eine Bohrung 10 zur Vermeidung von örtlichen Spannungsspitzen. Es kann auch ein schräg zur radialen Richtung liegender, mit einer radialen Komponente versehener Verlauf der Schlitze 6 zweckmäßig sein. Die einzelnen Segmente 7 überstreichen bezogen auf die Drehachse 9 jeweils ein Bogenmaß c, welches in der gezeigten Ausführung für jedes Segment 7 gleich ist. Die Segmente 7 überstreichen dementsprechend jeweils einen Drehwinkel von 60°. Es kann auch eine abweichende Anzahl von Segmenten 7 zweckmäßig sein.

Die Teilung der Zahngruppen 5, 5' und der Segmente 7 sind bezogen auf ihre Drehwinkellage derart aufeinander abgestimmt, daß innerhalb jedes Segmentes 7 jeweils eine Zahnlücke 4 liegt. Es kann auch vorteilhaft sein, daß jedem Segment 7 zwei oder mehr Zahnlücken 4 zugeordnet sind. Aus der gleichbleibenden Teilung der Segmente 7 und der veränderlichen Teilung der Zahngruppen 5, 5' ergibt sich, daß die jeweilige Lage der Zahnlücke 4 innerhalb des zugeordneten Segmentes 7 - bezogen auf die Umfangsrichtung - bei jedem einzelnen Segment 7 variiert. Die einzelnen Zahngruppen 5, 5' unterscheiden sich nicht nur in ihrem Bogenmaß d, d', sondern sind auch durch die jeweils variierende relative Lage der Schlitze 6 in unterschiedlich große Teilsegmente aufgeteilt. Die variierende Lage der Zahnlücken 4 vermeidet eine harmonische Schwingungsanregung durch die Schnittkräfte an den Sägezähnen 3. Verbleibende Schwingungsanregungen sind infolge der variierenden Lage der Zahnlücken 4 unregelmäßig, was die Ausbildung harmonischer Resonanzen innerhalb eines einzelnen Segmentes 7 oder des Kreissägeblattes 1 insgesamt erschwert.

Fig. 2 zeigt in einer vergrößerten Detailansicht den Umfangsbereich des Kreissägeblattes 1 nach Fig. 1 im Bereich der Zahnlücke 4 zwischen den beiden Zahngruppen 5, 5'. Die einzelnen Sägezähne 3, 3' umfassen einen Zahnkörper 11 mit einer aufgelöteten Schneide 12 aus Hartmetall und einem in Drehrichtung 15 vorgelagerten Spanraum 13. Die Schneide 12 kann auch durch einen entsprechenden Schliff des Zahnkörpers 11 ausgebildet sein. Jeder Spanraum 13 weist in radialer Richtung zwischen einer Kreisbahn 16 von Zahnspitzen 14 und dem Tragkörper 2 eine Tiefe f auf.

Den einzelnen Zahnspitzen 14 ist jeweils eine radial verlaufende strichpunktierte Linie 17 zugeordnet, die die Teilung der Sägezähne 3, 3' verdeutlichen. Sämtliche Sägezähne 3, 3' des Kreissägeblattes 1 weisen eine gleichbleibende Teilung auf, die sich in einem jedem Sägezahn 3, 3' zugeordneten, gleichen Bogenmaß a, a' äußert.

Zwischen den beiden Zahngruppen 5, 5' liegt die Zahnlücke 4, die durch das vollständige Fehlen eines einzelnen Sägezahnes 3 einschließlich seines Zahnkörpers 11 gebildet ist. Die Zahnlücke 4 beschreibt demnach ein Bogenmaß b, welches gleich dem Bogenmaß a, a' der benachbarten Zahngruppen 5, 5' ist. Es kann auch zweckmäßig sein, ein abweichendes Bogenmaß b der Zahnlücke 4 vorzusehen, wobei insbesondere zwei oder mehr Zahnlücken 4 aufeinanderfolgend unter Bildung eines zwei- oder mehrfachen Bogenmaßes b vorteilhaft sein kann. Die Zahnlücke 4 weist im gezeigten Ausführungsbeispiel eine von der Kreisbahn 16 in radialer Richtung zum Tragkörper 2 verlaufende Tiefe e auf, die gleich der Tiefe f des Spanraumes 13 ist. In Verbindung mit dem Fehlen eines Sägezahnes 3 in der Zahnlücke 4 ergibt sich ein in Umfangsrichtung vergrößerter Spanraum 13", der eine größere Menge von Zerspangut aufnehmen kann. Es kann auch zweckmäßig sein, zusätzlich oder alternativ eine größere Tiefe e der Zahnlücke 4 im Vergleich zur Tiefe f des Spanraumes 13 vorzusehen.

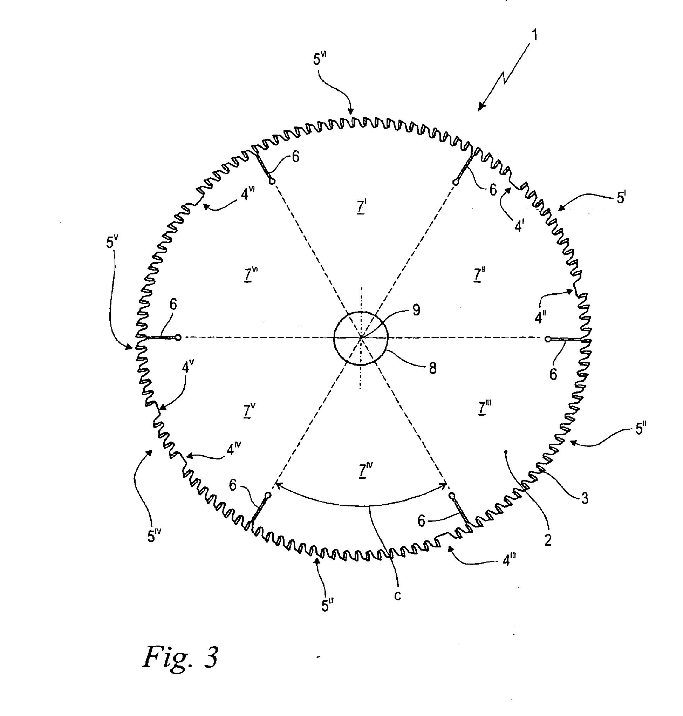

Nach Fig. 3 ist eine alternative Ausführung vorgesehen, bei der ebenso wie beim Ausführungsbeispiel nach den Fig. 1 und 2 der Tragkörper 2 in insgesamt sechs Segmente 7^{I} bis 7^{VI} gleichen Bogenmaßes c aufgeteilt ist. Es sind ebenfalls sechs über den Umfang des Kreissägeblattes 1 verteilte Zahnlücken 4^{I} bis 4^{VI} vorgesehen, die die Sägezähne 3 in insgesamt sechs Zahngruppen 5^{I} bis 5^{VI} aufteilen. Abweichend vom Ausführungsbeispiel nach Fig. 2 ist eine Lage der Zahnlücken 4 derart vorgesehen, daß im Umfangsbereich der Segmente 7 abweichende Anzahlen von Zahnlücken 4 vorgesehen sind. Die Segmente 7^{I} und 7^{III} weisen keine Zahnlücke 4 auf, während die Segmente 7^{IV} und 7^{VI} jeweils eine einzelne Zahnlücke 4^{III} und 4^{VI} aufweisen. Die weiteren Segmente 7^{II} und 7^{V} sind mit jeweils zwei Zahnlücken 4^{I}, 4^{II}, 4^{IV} und 4^{V} versehen. Die gezeigte Anordnung führt dazu, daß zwei Zahngruppen 5^{II} und 5^{VI} jeweils ein zugeordnetes Segment 7^{III} und 7^{I} vollständig, also einschließlich der beidseitig begrenzenden Schlitze 6 überstreichen, während zwei Zahngruppen 5^{I}, 5^{IV} vollständig und ohne Unterbrechung durch einen Schlitz 6 in dem jeweils zugeordneten Segment 7^{II}, 7^{V} liegen. Im übrigen variiert die Zähnezahl der einzelnen Zahngruppen 5 und die Lage der Zahnlücken 4 derart, daß die Zahnanordnungen aller Segmente voneinander abweichen.

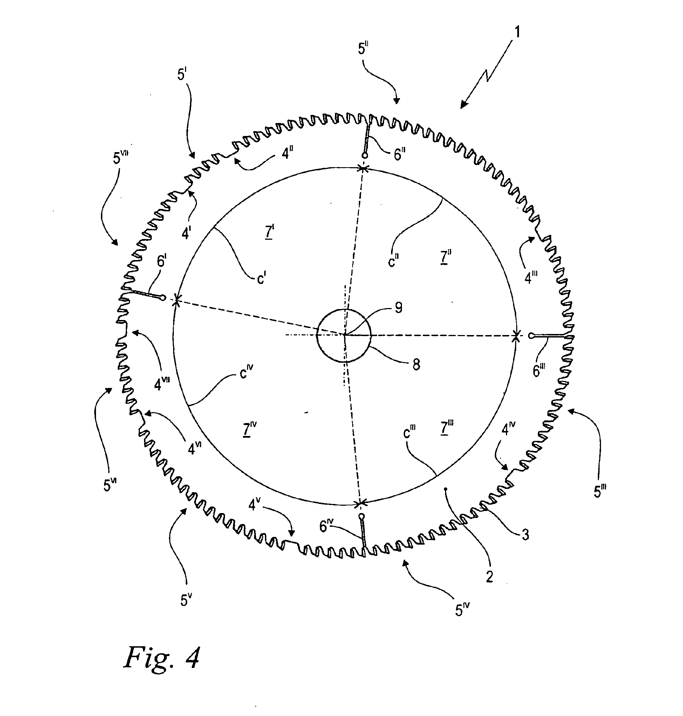

Beim weiteren Ausführungsbeispiel nach Fig. 4 sind insgesamt vier Schlitze 6^{I} bis 6^{IV} vorgesehen, die in Umfangsrichtung des Kreissägeblattes 1 ungleichmäßig verteilt sind und den Tragkörper 2 in insgesamt vier, hinsichtlich ihres Bogenmaßes c^{I} bis c^{IV} voneinander abweichende Segmente 7^{I} bis 7^{IV} aufteilt. Abweichend von der Anzahl der Segmente 7 sind insgesamt 7 Zahnlücken 4^{I} bis 4^{VII} vorgesehen. Diese sind derart über den Umfang verteilt angeordnet, daß die beiden Segmente 7^{II} und 7^{III} jeweils eine Zahnlücke 4^{III}, 4^{IV} aufweisen. Das Segment 7^{I} ist mit zwei Zahnlücken 4^{I}, 4^{II} versehen, während im Segment 7^{IV} insgesamt drei Zahnlücken 4^{V}, 4^{VI}, 4^{VII} angeordnet sind. Von den insgesamt sieben Zahngruppen 5^{I} bis 5^{VII} liegen drei Zahngruppen 5^{I}, 5^{V}, 5^{VI} vollständig innerhalb des jeweils zugeordneten Segmentes 7^{I}, 7^{IV}. Die weiteren Zahngruppen 5 überstreichen jeweils einen Schlitz 6, durch den sie in jeweils zwei Teilgruppen aufgeteilt sind. Es kann auch eine Anordnung zweckmäßig sein, bei der - wie beim Ausführungsbeispiel nach Fig. 3 - eine oder mehrere Zahngruppen 5 ein jeweiliges Segment 7 einschließlich der eingrenzenden Schlitze 6 überstreicht. Ebenso kann es zweckmäßig sein, einen Schlitz 6 im Bereich einer Zahnlücke 4 vorzusehen.

In den übrigen Merkmalen und Bezugszeichen stimmen die Ausführungsbeispiele nach den Fig. 3 und 4 mit dem nach den Fig. 1 und 2 überein. Allen gezeigten Ausführungsformen ist gemein, daß die Verteilung der Zahnlücken 4 und Schlitze 6 derart gewählt ist, daß sich eine Auswuchtung des Kreissägeblattes 1 um seine Drehachse 9 ohne zusätzliche Maßnahmen ergibt.

## Patentansprüche

1. Kreissägeblatt (1) mit einem kreisscheibenförmigen Tragkörper (2) und einer Anzahl um den Umfang des Tragkörpers (2) verteilter Sägezähne (3, 3'), wobei die Sägezähne (3, 3') durch mindestens zwei Zahnlücken (4) in mindestens zwei Zahngruppen (5, 5') aufgeteilt sind, und dabei innerhalb jeder Zahngruppe (5, 5') eine durch die Sägezähne (3, 3') gebildete Teilung konstant ist,
**dadurch gekennzeichnet, daß** der Tragkörper (2) mindestens zwei von seinem Umfang aus mit einer radialen Komponente nach innen verlaufende Schlitze (6) aufweist, die den Tragkörper (2) in eine ebensolche Anzahl von Segmenten (7) aufteilt, wobei einzelne Segmente (7) des Kreissägeblattes (1) in ihrem Bogenmaß (c) voneinander abweichen.

2. Kreissägeblatt nach Anspruch 1,
**dadurch gekennzeichnet, daß** zwei benachbarte Zahngruppen (5, 5') durch eine Zahnlücke (4) von einander getrennt sind, deren Bogenmaß (b) gleich einem Bogenmaß (a) eines Sägezahns (3, 3') ist.

3. Kreissägeblatt nach Anspruch 1 oder 2,
**dadurch gekennzeichnet, daß** das Bogenmaß (a) eines einzelnen Sägezahns (3, 3') und das Bogenmaß (b) einer einzelnen Zahnlücke (4) für sämtliche Zahngruppen (5, 5') und Zahnlücken (4) des Kreissägeblattes (1) gleich ist.

4. Kreissägeblatt nach einem der Ansprüche 1 bis 3,
**dadurch gekennzeichnet, daß** einzelne Zahngruppen (5, 5') und insbesondere sämtliche Zahngruppen (5, 5') des Kreissägeblattes (1) voneinander abweichende Zähnezahlen aufweisen.

5. Kreissägeblatt nach einem der Ansprüche 1 bis 4,
**dadurch gekennzeichnet, daß** sämtliche Segmente (7) des Kreissägeblatts (1) in ihrem Bogenmaß (c) voneinander abweichen.

6. Kreissägeblatt nach einem der Ansprüche 1 bis 5,
**dadurch gekennzeichnet, daß** die Anzahl der Segmente (7) und die Anzahl der Zahngruppen (5) von einander abweichen.

7. Kreissägeblatt nach einem der Ansprüche 1 bis 6,
**dadurch gekennzeichnet, daß** die jeweilige Lage der Zahnlücke (4) innerhalb des zugeordneten Segmentes (7) - bezogen auf die Umfangsrichtung - für einzelne Segmente (7) und insbesondere für alle Segmente (7) des Kreissägeblattes (1) voneinander abweichen.

8. Kreissägeblatt nach einem der Ansprüche 1 bis 7,
**dadurch gekennzeichnet, daß** die Anzahl der einem einzelnen Segment (7) zugeordneten Zahnlücken (4) für mehrere und insbesondere für alle Segmente (7) des Kreissägeblattes (1) gleich ist.

9. Kreissägeblatt nach einem der Ansprüche 1 bis 7,
**dadurch gekennzeichnet, daß** die Anzahl der einem einzelnen Segment (7) zugeordneten Zahnlücken (4) für mehrere und insbesondere für alle Segmente (7) des Kreissägeblattes (1) variiert und vorteilhaft in einem Bereich von einschließlich null bis einschließlich drei Zahnlücken (4) pro einzelnem Segment (7) liegt.

## Claims

1. Circular sawblade (1) with a circular disc-shaped support body (2) and a number of saw teeth (34, 3') distributed around the circumference of the support body (2), such that the saw teeth (3, 3') are divided by at least two tooth gaps (4) into at least two tooth groups (5, 5'), the spacing formed by the saw teeth (3, 3') within each tooth group (5, 5') being constant,
**characterised in that** the support body (2) has at least two slits (6) that extend from its circumference with a radial component inwards, which divide the support body (2) into an equal number of segments (7), such that individual segments (7) of the circular sawblade (1) differ from one another in their arc lengths.

2. Circular sawblade according to Claim 1,
**characterised in that** two adjacent tooth groups (5, 5') are separated from one another by a tooth gap (4) whose arc length (b) is equal to the arc length (a) of a saw tooth (3, 3').

3. Circular sawblade according to Claims 1 or 2,
**characterised in that** the arc length (a) of and individual saw tooth (3. 3') and the arc length (b) of an individual tooth gap (4) are equal for all the tooth groups (5, 5') and tooth gaps (4) of the circular sawblade (1).

4. Circular sawblade according to any of Claims 1 to 3,
**characterised in that** individual tooth groups (5, 5') and in particular all the tooth groups (5, 5') of the circular sawblade (1) have tooth numbers that differ from one another.

5. Circular sawblade according to any of Claims 1 to 4,
**characterised in that** all the segments (7) of the circular sawblade (1) have arc lengths (c) that differ from one another.

6. Circular sawblade according to any of Claims 1 to 5,
**characterised in that** the number of segments (7) and the number of tooth groups (5) are different from one another.

7. Circular sawblade according to any of Claims 1 to 6,
**characterised in that** the respective position of the tooth gaps (4) within their associated segment (7) - relative to the circumferential direction - differ from one another for individual segments (7) and in particular for all the segments (7) of the circular sawblade (1).

8. Circular sawblade according to any of Claims 1 to 7,
**characterised in that** the number of tooth gaps (4) in any individual segment (7) is the same for several, and in particular for all the segments (7) of the circular sawblade (1).

9. Circular sawblade according to any of Claims 1 to 7,
**characterised in that** the number of tooth gaps (4) in any individual segment (7) varies for several, and in particular all the segments of the circular sawblade (1), and advantageously ranges inclusively from zero to three tooth gaps (4) per individual segment (7).

## Revendications

1. Lame de scie circulaire (1) ayant un composant de soutien (2) et une pluralité de dents de scie (3, 3') réparties sur la circonférence du composant de soutien (2), où les dents de scie (3, 3') sont divisées par au moins deux entredents (4) en au moins deux groupes de dents (5, 5') et une séparation formée par les dents de scie (3, 3') est constante à l'intérieur de chaque groupe de dents (5, 5'),
**caractérisée en ce que** le composant de soutien (2) présente au moins deux fentes (6) s'étendant à partir de sa circonférence avec un composant radial vers l'intérieur, lesquelles divisent le composant de soutien (2) en un nombre correspondant de segments (7), les segments (7) individuels de la lame de scie circulaire (1) différant les uns des autres dans leur mesure d'arc (c).

2. Lame de scie circulaire selon la revendication 1,
**caractérisée en ce que** deux groupes de dents (5, 5') adjacents sont séparés l'un de l'autre par un entredent (4) dont la mesure d'arc (b) est égale à une mesure d'arc (a) d'une dent de scie (3, 3').

3. Lame de scie circulaire selon la revendication 1 ou 2,
**caractérisée en ce que** la mesure d'arc (a) d'une dent de scie (3, 3') individuelle et la mesure d'arc (b) d'un entredent (4) individuel sont égales pour l'ensemble des groupes de dents (5, 5') et des entredents (4) de la lame de scie circulaire (1).

4. Lame de scie circulaire selon l'une quelconque des revendications 1 à 3,
**caractérisée en ce que** des groupes de dents (5, 5') individuels et en particulier l'ensemble des groupes de dents (5, 5') de la lame de scie circulaire (1) présentent des nombres de dents différant les uns des autres.

5. Lame de scie circulaire selon l'une quelconque des revendications 1 à 4,
**caractérisée en ce que** l'ensemble des segments (7) de la lame de scie circulaire (1) diffèrent les uns des autres dans leur mesure d'arc (c).

6. Lame de scie circulaire selon l'une quelconque des revendications 1 à 5,
**caractérisée en ce que** le nombre de segments (7) et le nombre de groupes de dents (5) diffèrent l'un de l'autre.

7. Lame de scie circulaire selon l'une quelconque des revendications 1 à 6,
**caractérisée en ce que** la position respective de l'entredent (4) à l'intérieur du segment (7) correspondant - par rapport à la direction circonférentielle - diffère pour des segments (7) individuels et en particulier pour tous les segments (7) de la lame de scie circulaire (1).

8. Lame de scie circulaire selon l'une quelconque des revendications 1 à 7,
**caractérisée en ce que** le nombre d'entredents (4) correspondant à un segment (7) individuel est égal pour plusieurs et en particulier pour tous les segments (7) de la lame de scie circulaire (1).

9. Lame de scie circulaire selon l'une quelconque des revendications 1 à 7,
**caractérisée en ce que** le nombre d'entredents (4) correspondant à un segment (7) individuel varie pour plusieurs et en particulier pour tous les segments (7) de la lame de scie circulaire (1), et ce de préférence dans une marge allant de zéro à trois entredents (4), ces deux nombres inclus, pour chaque segment (7) individuel.
